(19) Europäisches Patentamt
European Patent Office
Office européen des brevets

(11) **EP 2 148 235 A1**

(12) **EUROPEAN PATENT APPLICATION**

(43) Date of publication:
**27.01.2010 Bulletin 2010/04**

(51) Int Cl.:
*G02F 1/01* (2006.01)　　*H04B 10/155* (2006.01)
*H04L 27/36* (2006.01)

(21) Application number: **09158432.6**

(22) Date of filing: **22.04.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **25.07.2008　CN 200810029747**

(71) Applicants:
 • **Huawei Technologies Co., Ltd.**
  **Longgang District, Shenzhen**
  **Guangdong 518129 (CN)**
 • **The Hong Kong Polytechnic University**
  **Hong Kong 999077 (CN)**

(72) Inventors:
 • **Xu, Xiaogeng**
  **Shenzhen**
  **Guangdong 518129 (CN)**

 • **Lv, Chao**
  **Shenzhen**
  **Guangdong 518129 (CN)**
 • **Yang, Yanfu**
  **Shenzhen**
  **Guangdong 518129 (CN)**

(74) Representative: **Körber, Martin Hans**
  **Mitscherlich & Partner**
  **Patent- und Rechtsanwälte**
  **Sonnenstraße 33**
  **80331 München (DE)**

Remarks:
Amended claims 1-15 in accordance with Rule 137 (2) EPC.

(54) **Method and device for controlling the bias voltage of a phase-shift-keying optical modulator**

(57)　　A method and a device for controlling the phase-shift bias voltage and the operating point bias voltage of a phase-shift-keying optical modulator are provided. The method includes the steps of obtaining an output signal of the optical modulator; obtaining information about a relation between the output signal of the optical modulator and a noise signal contained in the output signal; analyzing the relation information between the output signal and the noise signal to obtain control information of a phase-shift bias voltage; and obtaining a current phase-shift bias voltage according to the control information, and loading the current phase-shift bias voltage on the optical modulator. In the present invention, the method for controlling a bias voltage of an optical modulator has an automatic feedback regulation function and can regulate a bias voltage of a $\pi/2$ phase shift unit of the optical modulator, so that the stability of the output signal of the optical modulator is increased.

FIG. 4

## Description

FIELD OF TECHNOLOGY

The present invention relates to the field of signal transmission, and more particularly to a method and a device for controlling a bias voltage of an optical modulator.

BACKGROUND

In an optical transmission system, an optical line modulation format is crucial to the optical transmission system. Selection of the format directly affects the transmission performance, spectral efficiency, nonlinear tolerance, dispersion tolerance and the like of the system. In a high-speed optical transmission system, a format based on a phase modulation technology is generally used, for example, differential phase shift keying (DPSK) and differential quadrature phase shift keying (DQPSK).

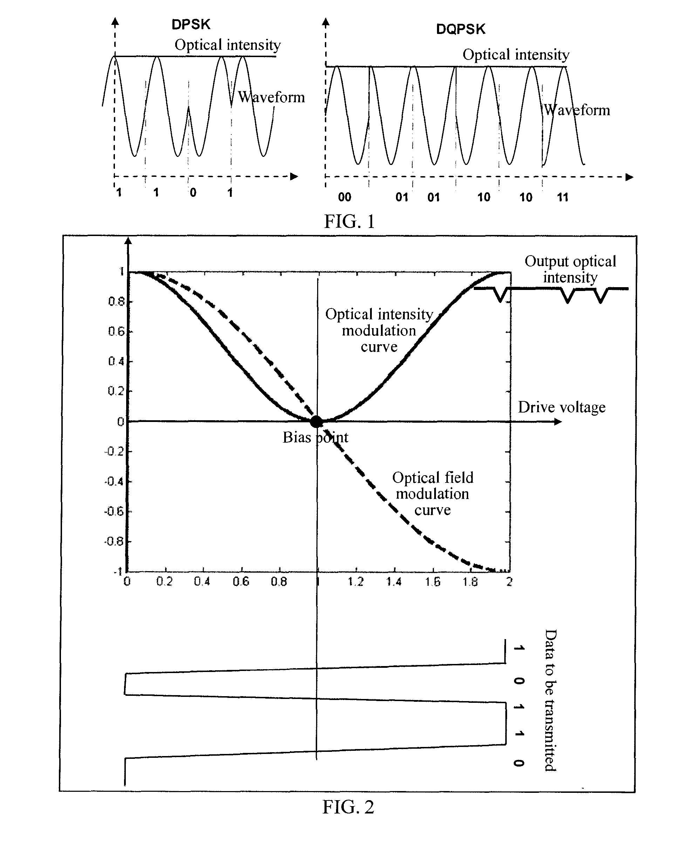

For the DPSK and DQPSK phase modulation technologies, digital information is carried by means of phases, and changes of phase information do not change a final output optical power. FIG 1 is a schematic view of waveforms and optical intensities of the DPSK and DQPSK. As can be seen from the figure, when bit information in the phase shift keying (PSK) modulation is zero, the waveform output still exists, and the optical intensity is a straight line, indicating that the output optical intensity does not change with the bit information.

The DQPSK is generated by using a cascaded Mach-Zender modulator (MZM), which is also called a dual-parallel modulator. The dual-parallel modulator includes an upper MZM modulator, a lower MZM modulator, and a $\pi/2$ phase shift unit disposed behind one of the two MZM modulators. FIG 2 is a schematic view of an optical intensity modulation curve and an optical field modulation curve of an MZM. Referring to FIG 2, a solid curve represents the optical intensity modulation curve, and a dotted curve represents the optical field modulation curve.

In the PSK modulation, an operating bias point (that is, a bias voltage) of the MZM is at the lowest point, and the input voltage is 2 Vpi. Vpi represents an input voltage required by a half wavelength ($\pi$) phase shift of light in a LiNbO3 crystal, and is manifested as a difference between an input voltage at the highest point and that at the lowest point in the optical intensity curve.

In the process of implementing the present invention, the inventor found that the prior art at least has the following problem.

In the $\pi/2$ phase shift unit of the cascaded MZM modulator, as the phase-shift bias voltage loaded on the $\pi/2$ phase shift unit is unstable, the phase shift signal output by the $\pi/2$ phase shift unit will be unstable. Thus, the control over the phase-shift bias voltage of the $\pi/2$ phase shift unit is extremely important for generating a stable PSK (such as DPSK and DQPSK) signal.

SUMMARY

Accordingly, the present invention is directed to a method and a device for controlling a bias voltage of an optical modulator, so as to automatically control a bias voltage of a $\pi/2$ phase shift unit in an optical modulator to obtain a stable output signal.

Therefore, on one hand, a method for controlling a bias voltage of an optical modulator is provided in an embodiment of the present invention. The method includes: obtaining an output signal of an optical modulator; obtaining relation information between the output signal of the optical modulator and a noise signal contained in the output signal; analyzing the relation information between the output signal and the noise signal to obtain control information of a phase-shift bias voltage; and obtaining a current phase-shift bias voltage according to the control information, and loading the current phase-shift bias voltage on the optical modulator.

On the other hand, a device for controlling a bias voltage of an optical modulator is provided in an embodiment of the present invention. The device includes a phase-shift bias voltage acquisition unit adapted to obtain a phase-shift bias voltage when a $\pi/2$ phase shift is performed. The phase-shift bias voltage acquisition unit includes a phase shift signal acquisition module, a signal-to-noise information acquisition module, a phase shift logic analysis module, and a phase-shift bias voltage acquisition module. The phase shift signal acquisition module is adapted to obtain an output signal of an optical modulator. The signal-to-noise information acquisition module is adapted to obtain relation information between the output signal of the optical modulator and a noise signal contained in the output signal. The phase shift logic analysis module is adapted to analyze the relation information between the output signal and the noise signal to obtain control information of a phase-shift bias voltage. The phase-shift bias voltage acquisition module is adapted to obtain a current phase-shift bias voltage according to the control information, and load the current phase-shift bias voltage on the optical modulator.

Accordingly, an optical emitter is further provided in an embodiment of the present invention. The optical emitter includes a laser, a driving module, and an optical modulator. The laser is adapted to generate continuous light. The driving module is adapted to input an electrical signal of data to be modulated. The optical modulator is adapted to modulate the electrical signal of the data to be modulated onto the continuous light according to a certain bias voltage to form an optical signal carrying the data. The optical emitter further includes the device for controlling a bias voltage of an optical modulator as described above.

In the solution provided by the present invention, as the device and method for controlling a bias voltage of an optical modulator have an automatic feedback regulation function, a stable phase-shift bias voltage can be obtained, thus increasing the stability of the phase shift signal.

BRIEF DESCRIPTION OF THE DRAWINGS

The present invention will become more fully understood from the detailed description given herein below for illustration only, and thus are not limitative of the present invention, and wherein:

FIG 1 is a schematic view of waveforms and optical intensities of DPSK and DQPSK;

FIG 2 is a schematic view of an optical intensity modulation curve and an optical field modulation curve of an MZM modulator;

FIG 3 is a schematic view illustrating the principle of an MZM modulator;

FIG 4 is a schematic view of a DQPSK phase modulation process;

FIG 5 is a schematic structural view of a bias-point bias voltage acquisition unit according to an embodiment of the present invention;

FIG 6 is a schematic structural view of a dither information acquisition module according to an embodiment of the present invention;

FIG 7 is a schematic structural view of a logic analysis module according to an embodiment of the present invention;

FIG 8 is a schematic structural view of a signal generation module according to an embodiment of the present invention;

FIG 9 is a schematic structural view of a bias-point bias voltage acquisition unit according to an embodiment of the present invention;

FIG 9a is a schematic structural view of a bias-point bias voltage acquisition unit according to an embodiment of the present invention;

FIG 10 is a schematic structural view of a phase-shift bias voltage acquisition unit according to an embodiment of the present invention;

FIG 11 is a schematic structural view of a signal-to-noise information acquisition module according to an embodiment of the present invention;

FIG 12 is a schematic view illustrating a relation between phase shift and noise energy;

FIG 13 is a schematic structural view of a phase-shift bias voltage acquisition module according to an embodiment of the present invention;

FIG 14 is a schematic view of a superposition of output optical vectors of a dual-parallel MZM;

FIG 15 is a schematic flow chart of a process for controlling a bias voltage of an optical modulator according to an embodiment of the present invention;

FIG 16 is a schematic flow chart of a process for obtaining a bias-point bias voltage according to an embodiment of the present invention; and

FIG 17 is a schematic view of a control of a bias point of an MZM.

DETAILED DESCRIPTION

The technical solution of the present invention will be clearly and fully described below with reference to the accompanying drawings. It is obvious that the embodiments to be described are only a part rather than all of the embodiments of the present invention. All other embodiments derived by those skilled in the art b ased on the embodiments of the present invention without carrying out creative activities should fall within the scope of the present invention.

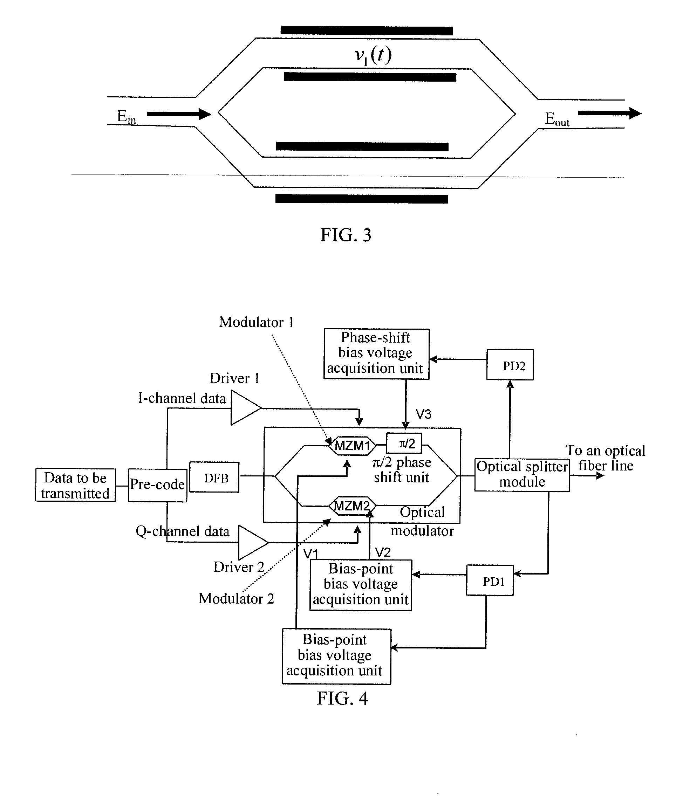

MZM modulators based on LiNbO3 crystal are usually used for phase modulation. FIG 3 is a schematic view of the principle of an MZM modulator. The principle lies in that the electro-optic coefficient of LiNbO3 is changed by an input voltage $v_1(t)$, resulting in a change in the crystal refractive index, and the change of the refractive index further causes an optical phase shift, thus modulating an electric signal onto a light signal.

The DQPSK is taken as an example below for illustrating a whole phase modulation process. As shown in FIG 4, data to be transmitted is pre-coded into I-channel data and Q-channel data. The I-channel data and Q-channel data are amplified by a driver 1 and a driver 2 to drive dual-parallel modulators MZM1 and MZM2.

Meanwhile, lasers emitted from a distributed feed back (DFB) laser enter the dual-parallel modulators MZM1 and MZM2, respectively. Driven by the I-channel data and Q-channel data amplified by the drivers, the dual-parallel modulators MZM1 and MZM2 modulate the lasers to output a DQPSK optical signal. A phase-modulated signal output by the MZM1 is $\pi/2$ phase shifted by a $\pi/2$ phase shift unit, synthesized with a signal output by the MZM2 into the DQPSK signal, and then output to an optical splitter module.

The output DQPSK optical signal is split by parts by the optical splitter module to a photo detector (PD) 1. After photoelectric conversion, an electrical signal is sent to a bias-point bias voltage acquisition unit. The bias voltage acquisition unit outputs two bias voltages V1 and V2 to the two MZMs.

Meanwhile, the output DQPSK optical signal is split by parts by the optical splitter module to a PD 2. After photoelectric conversion, an electrical signal is sent to a phase-shift bias voltage acquisition module. The phase-shift bias voltage acquisition module outputs a bias voltage V3 to a phase shift unit, thus accurately generating a $\pi/2$ phase shift.

The pre-coding process shown in FIG 4 is an important part in a DQPSK optical transmission system, but may be omitted in a QPSK optical transmission system.

The foregoing illustration of operating processes of the DQPSK and QPSK optical transmission systems is mainly given for the purpose of making the embodiments of the present invention more comprehensible. It should not be construed that the embodiments of the present invention are merely limited to these two optical transmission systems. The method and device for obtaining a phase-modulated signal provided in the embodiments of the present invention should be construed as applicable to all situations when a phase-shift bias voltage and a bias-point bias voltage need to be controlled during phase modulation.

The device for obtaining a bias voltage in an embodiment of the present invention may include a phase-shift bias voltage acquisition unit 2, and may further include a bias-point bias voltage acquisition unit 1. The bias-point bias voltage obtain unit 1 is adapted to obtain a bias voltage during phase modulation. The position of the bias voltage acquisition unit 1 in the whole device is as shown in FIG 4. It should be noted that the whole device may include more than one bias voltage acquisition units. For example, as shown in FIG 4, the whole device includes two bias voltage acquisition units adapted to provide bias voltages to the two MZMs, respectively.

The device for obtaining a bias voltage in an embodiment of the present invention also may not include the bias-point bias voltage acquisition unit 1 and the PD 1 (at this time, the optical splitter module is not needed for light splitting), but only include the phase-shift bias voltage acquisition unit 2 and the PD 2. At this time, a bias-point bias voltage can be provided by using a method in the prior art, and the details will not be described herein again.

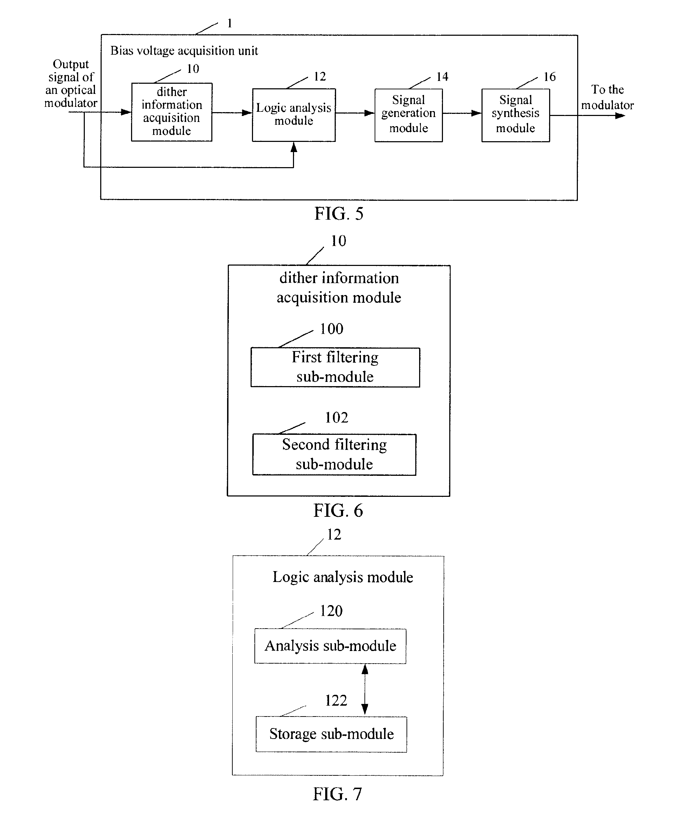

As shown in FIG 5, the bias voltage acquisition unit 1 further includes a dither information acquisition module 10, a logic analysis module 12, a signal generation module 14, and a signal synthesis module 16.

The dither information acquisition module 10 is adapted to obtain dithering frequency information in an output signal of an optical modulator. Specifically, in the DQPSK system as shown in FIG 4, the output signal of the optical modulator refers to an electrical signal from the PD 1. Specifically, the dither information acquisition module 10 may obtain the dithering frequency information by filtering. As shown in FIG 6, at this time, the dither information acquisition module 10 may include a first filtering sub-module 100 and a second filtering sub-module 102. The first filtering sub-module 100 is adapted to filter the output signal of the optical modulator to obtain first frequency energy information of the dithering frequency. The second filtering sub-module 102 is adapted to filter the output signal of the optical modulator to obtain second frequency energy information or other multiple frequency energy information of the dithering frequency.

The first filtering sub-module 100 and the second filtering sub-module 102 may include one or more filters, and the filtering process of the one or more filters may be controlled. The control process may be completed either within or outside the dither information acquisition module 10. The control process may be an automatic process, or a manual process. The details should be well known to those skilled in the art, and thus will not be described herein again.

The logic analysis module 12 is adapted to analyze the output signal of the optical modulator and the obtained dithering frequency information to obtain information about a bias point. As shown in FIG 7, the logic analysis module 12 includes an analysis sub-module 120 and a storage sub-module 122. The analysis sub-module 120 is adapted to analyze the output signal of the optical modulator and the obtained dithering frequency information according to a bias point judgment standard stored in the storage sub-module 122 to obtain the bias point information. The storage sub-module 122 is adapted to store the bias point judgment standard.

The bias point judgment standard includes the following situations.

When the second frequency energy or other multiple frequency energy is the highest, the first frequency energy is the lowest, and the output signal of the optical modulator (that is, the signal that is not filtered) changes from large to small, the bias point locates at a lowest point.

When the two-time frequency energy or other multiple frequency energy is the highest, the first frequency energy is the lowest, and the output signal of the optical modulator changes from small to large, the bias point locates at a highest point.

When the first frequency energy is the highest, and the second frequency energy or other multiple frequency energy is the lowest, the bias point locates at an integration point.

Here, the lowest point, the highest point and the integration point refer to a lowest point, a highest point and an integration point of the optical intensity modulation curve of the MZM as shown in FIG 2, and the integration point refers to a center point between the highest point and the lowest point in the optical intensity curve.

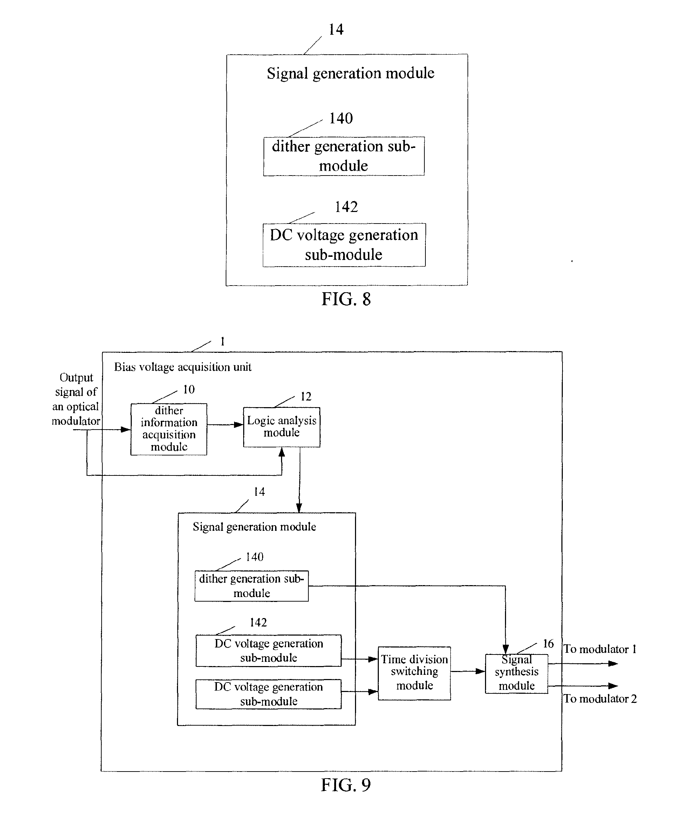

The signal generation module 14 is adapted to obtain a direct current (DC) bias voltage according to the information about the bias point. As shown in FIG 8, according to different signals that are generated, the signal generation module 14 further includes a dither generation sub-module 140 and a DC voltage generation sub-module 142. The dither generation sub-module 140 is adapted to generate a loaded dither signal. The DC voltage generation sub-module 142 is adapted to obtain the DC bias voltage according to the bias point information and a bias point regulation strategy.

The bias point regulation strategy is illustrated in combination with the bias point judgment standard.

At the beginning, a series of DC voltages are generated by voltage scanning. The DC voltages are loaded onto the optical modulator together with the dither signal, so that a series of phase-modulated signals containing the dither signal can be obtained. By analyzing the phase-modulated signals and the obtained dithering frequency information, a DC voltage can be obtained when the second frequency energy or other multiple frequency energy is the highest, the first frequency energy is the lowest, and the output signal of the optical modulator (that is, the signal phase-modulated but not filtered) changes from large to small. At this time, the DC voltage is a bias voltage when the bias point locates at the lowest point. That is, the DC voltage generation sub-module 142 generates the desired DC bias voltage.

The signal synthesis module 16 is adapted to obtain a bias voltage according to the loaded dither signal and DC bias voltage generated by the signal generation module 14. Specifically, a signal modulation sub-module included in the signal synthesis module 16 may modulate the DC bias voltage according to the loaded dither signal to obtain a dither-modulated bias-point bias voltage.

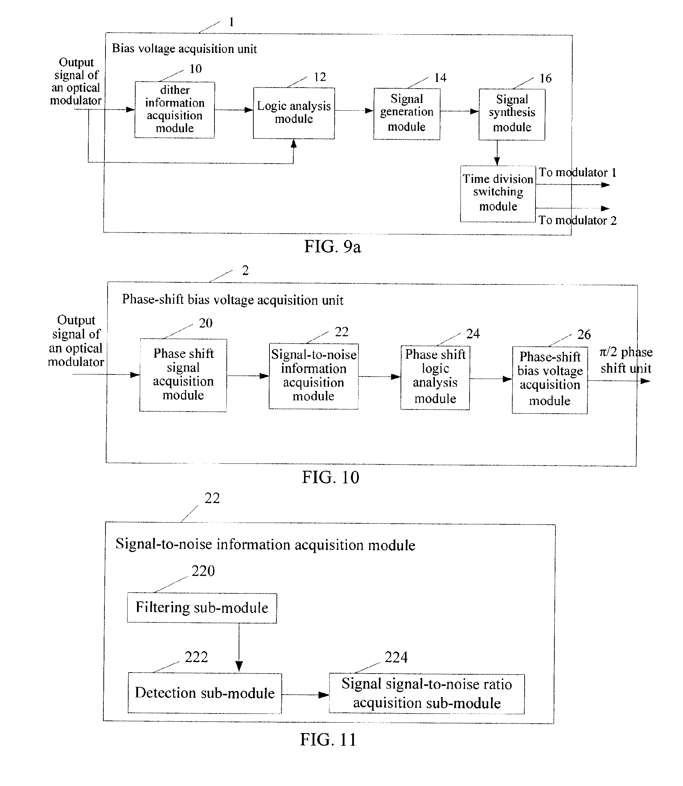

The device for obtaining a phase-modulated signal provided in an embodiment of the present invention may also use only one bias-point bias voltage acquisition unit to provide bias voltages to the two MZMs. At this time, the bias-point bias voltage acquisition unit includes at least two DC voltage generation sub-modules and one time division switching module, as shown in FIG 9. The time division switching module is adapted to perform time division switching on the loaded dither signal generated by the dither generation sub-module to obtain at least two loaded dither signals, and provide the at least two loaded dither signals to the signal synthesis module (or the signal modulation sub-module) so as to synthesize at least two bias voltages, which are provided to the two MZMs, respectively.

A bias-point bias voltage acquisition unit similar to that in FIG 9 may also adopt other structures to provide at least two bias voltages. FIG 9 is merely an example, and variations made based on this should also be construed as falling within the scope of the present invention. As shown in FIG 9a, at least two bias voltages may also be provided after the time division switching module is disposed behind the signal synthesis module. Many similar variations may be made, and as such variations should be known to those skilled in the art, the details will not be described herein again.

The device for obtaining a bias voltage in an embodiment of the present invention may also only include a phase-shift bias voltage acquisition unit 2 for obtaining a bias voltage when a $\pi/2$ phase shift is performed. The position of the phase-shift bias voltage acquisition unit 2 in the whole device is as shown in FIG 4. As shown in FIG 10, the phase-shift bias voltage acquisition unit 2 may further include a phase shift signal acquisition module 20, a signal-to-noise information acquisition module 22, a phase shift logic analysis module 24, and a phase-shift bias voltage acquisition module 26.

The phase shift signal acquisition module 20 is adapted to obtain the output signal of the optical modulator, i.e., the electrical signal that is generated by the PD 2 and $\pi/2$ phase shifted in FIG. 4.

The signal-to-noise information acquisition module 22 is adapted to obtain relation information between the output signal of the optical modulator and a noise signal contained in the output signal. The relation information between the signal and the noise may be a signal-to-noise ratio. At this time, the signal-to-noise information acquisition module 22 may include a signal-to-noise ratio acquisition sub-module. The signal-to-noise ratio acquisition sub-module is adapted to filter the output signal of the optical modulator and obtain a signal-to-noise ratio of the output signal of the optical modulator according to a filtering result. A filtering frequency band may be a frequency band of the signal and a frequency band of the noise, and generally, a low-frequency noise is filtered out.

As shown in FIG 11, the signal-to-noise information acquisition module 22 may also include a filtering sub-module 220, a detection sub-module 222, and a signal signal-to-noise ratio acquisition sub-module 224. The filtering sub-module 220 is adapted to filter the output signal of the optical modulator. The detection sub-module 222 is adapted to perform an envelope detection on the filtered signal and obtain a result of the envelope detection. The signal signal-to-noise ratio acquisition sub-module 224 is adapted to obtain a signal-to-noise ratio of the output signal of the optical modulator according to the result of the envelope detection. That is, the signal-to-noise ratio is calculated after the filtered signal is detected, so as to improve the sensitivity of the system. The detection sub-module 222 may be realized by using a Schottky diode.

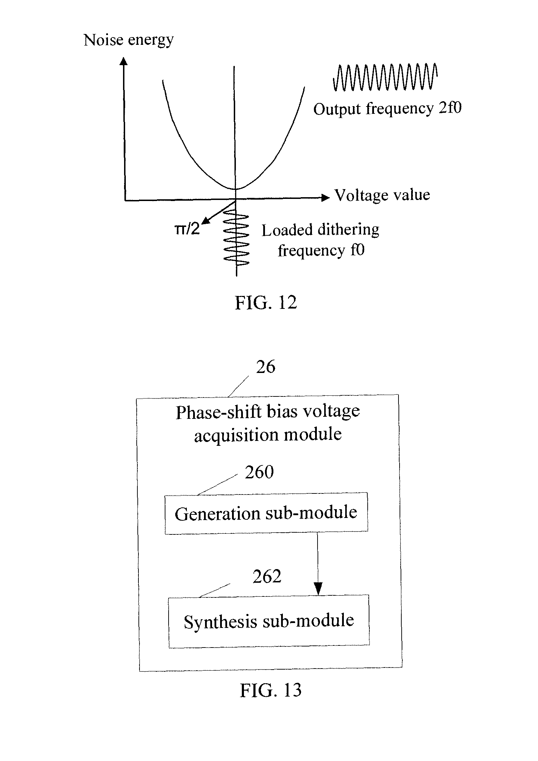

The relation information between the output signal of the optical modulator and the noise thereof may also be dither information in the noise. When a phase of a phase shifter is $\pi/2$, the noise is the lowest. As the phase deviates from $\pi/2$, the noise will increase. Thus, a curve as shown in FIG 12 exists for a phase-control point. When the phase is controlled at $\pi/2$, f0 dither is loaded. 2f0 information may be detected from the output noise energy. At this time, it means that the phase shift controller accurately controls the phase at $\pi/2$.

Accordingly, the signal-to-noise information acquisition module 22 may include a multiplied frequency information acquisition sub-module. The multiplied frequency information acquisition sub-module is adapted to filter the output signal of the optical modulator to obtain first frequency energy information, second frequency energy information or other multiple frequency energy information of the dithering frequency in the noise of the signal.

The phase shift logic analysis module 24 is adapted to analyze the relation information between the signal and the noise to obtain control information of a phase-shift bias voltage. By analyzing the relation information between the signal and the noise (for example, a signal-to-noise ratio), it can be known whether the phase shift of the signal is accurately controlled at $\pi/2$ or not. If the phase shift is accurately controlled at $\pi/2$, the signal energy reaches a maximum and the noise energy reaches a minimum, such that the signal-to-noise ratio reaches a maximum. As the phase shift of the signal is controlled by the bias voltage thereof, the control information of the phase-shift bias voltage can be obtained once the signal-to-noise ratio is known, based on the above principle.

If the relation information between the signal and the noise includes dither information, the phase shift logic analysis module 24 may include a control information acquisition sub-module. The control information acquisition sub-module is adapted to obtain control information of a phase-shift bias voltage according to noise energy information, the first frequency energy information, and the second frequency energy information or other multiple frequency energy information of the phase shift signal.

The specific principle is illustrated with reference to FIG 12. At the beginning, a series of phase-shift DC voltages are generated by voltage scanning. The phase-shift DC voltages are loaded onto the $\pi/2$ phase shifter together with the dither signal, so that a series of phase shift signals containing the dither signal can be obtained. By analyzing the noise energy of the phase shift signals (or, and dithering frequency information), a phase-shift bias voltage can be obtained when the signal energy of the signal reaches a maximum and the noise energy reaches a minimum (or when dither information is loaded, the signal contains second dithering frequency or other multiple frequency information, or the second dithering frequency energy or other multiple frequency energy is greater than the first dithering frequency energy). The voltage is the desired phase-shift bias voltage, according to which the control information of the phase-shift bias voltage can generated.

A phase-shift bias voltage acquisition module 26 is adapted to obtain a current phase-shift bias voltage according to the control information, and load the current phase-shift bias voltage onto the optical modulator. In the case in FIG 4, the current phase-shift bias voltage is specifically loaded onto the $\pi/2$ phase shift unit. If the relation information between the signal and the noise includes dither information, the dither information needs to be loaded in the bias voltage. At this time, the phase-shift bias voltage acquisition module 26 further includes a generation sub-module 260 and a synthesis sub-module 262, as shown in FIG 13. The generation sub-module 260 is adapted to obtain the loaded dither signal and DC bias voltage. The synthesis sub-module 262 is adapted to add the loaded dither signal and DC bias voltage to obtain a phase-shift bias voltage.

Meanwhile, an optical emitter is further provided in an embodiment of the present invention. The optical emitter includes a laser, a driving module, and an optical modulator. The laser is adapted to generate continuous light. The driving module is adapted to input an electrical signal of data to be modulated. The optical modulator is adapted to modulate the electrical signal of the data to be modulated onto the continuous light according to a certain bias voltage to form an optical signal carrying the data. Meanwhile, the optical emitter further includes the device for controlling a bias voltage of an optical modulator as described above. FIG. 4 is a schematic structural view of an optical emitter according to an embodiment of the present invention.

As can be seen from the above description, in the embodiments of the present invention, the device for controlling a bias voltage of an optical modulator has an automatic feedback regulation function, and can regulate a phase-shift bias voltage of the $\pi/2$ phase shift unit and a bias-point bias voltage of the MZM modulator, so as to control the result of the phase modulation of the optical modulator. Thus, the sensitivity of the $\pi/2$ phase shift control can be greatly increased, and the stability and accuracy of the phase-modulated signal can be increased as a whole.

Accordingly, a method for controlling a bias voltage of an optical modulator is further provided in an embodiment of the present invention.

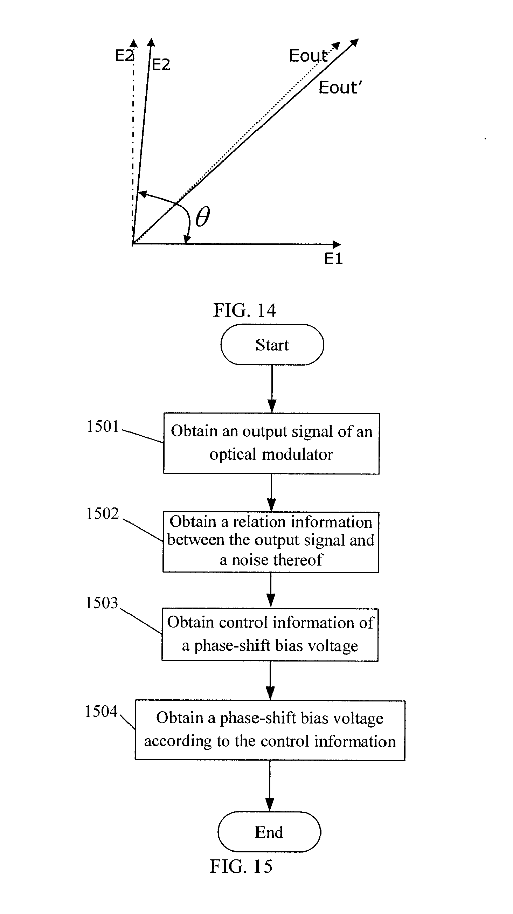

In a solution of generating DQPSK by a dual-parallel MZM, a final output optical signal is a superposition of vectors of optical signals output from an upper arm and a lower arm, as shown in FIG 14. Here, $\theta$ is an angle controlled by a $\pi/2$ phase shifter, E1 and E2 are optical fields output from the upper and lower arms, and Eout is a final output vector of the optical fields. When $\theta$ is $\pi/2$, the final output vector is Eout shown as a dotted line. When $\theta$ is changed to be different from $\pi/2$, the final output Eout changes into Eout'. It can be known that the final output resultant vector has changed. The final output resultant vector is as shown in the following equation.

$$\left|E_{out}\right|^2 = \left|E_1\right|^2 + \left|E_2\right|^2 - 2\left|E_1\right|\left|E_2\right|\cos\theta$$

It can be known that when $\theta$ is $\pi/2$, the output resultant vector is $|E_{out}|^2 = |E_1|^2 + |E_2|^2$. When $\theta$ is changed around $\pi/2$, the output resultant vector changes, as can be seen from FIG 14. When a jitter occurs to the output resultant vector, a low-frequency noise of an output signal may be caused.

Thus, the phase of the phase shift needs to be controlled, so as to reduce the low-frequency noise of the output signal. Generally, the phase of the phase shift is controlled by the phase-shift bias voltage, and it can be known whether the phase is controlled at $\pi/2$ or not by detecting the low-frequency noise.

Therefore, the method for obtaining a bias voltage provided in the embodiment of the present invention includes a process for obtaining a phase-shift bias voltage for performing a $\pi/2$ phase shift. As shown in FIG 15, the process includes the following steps.

In Step 1501, an output signal of an optical modulator is obtained. As shown in FIG 4, the output signal of the optical modulator is an electrical signal output by the PD 2.

In Step 1502, information about a relation between the output signal of the optical modulator and a noise signal contained in the output signal is obtained.

The relation information between the signal and the noise may be a signal-to-noise ratio. At this time, Step 1502 may further include: filtering the output signal of the optical modulator and obtaining a signal-to-noise ratio of the output signal of the optical modulator according to a filtering result. A filtering frequency band may be a frequency band of the signal and a frequency band of the noise, and generally, a low-frequency noise is filtered out.

Meanwhile, after the filtering, in order to improve the sensitivity of the system, a detection process may be added. At this time, the above process may be: filtering the output signal of the optical modulator; and performing an envelope detection on the filtered signal, obtaining a result of the envelope detection, and obtaining the signal-to-noise ratio of the output signal according to the result of the envelope detection. The detection may be implemented by using a Schottky diode.

The relation information between the output signal of the optical modulator and the noise thereof may also be dither information in the noise. When a phase of a phase shifter is $\pi/2$, the noise is the lowest. As the phase deviates from $\pi/2$, the noise will increase. Thus, a curve as shown in FIG 12 exists for a phase-control point. When the phase is controlled at $\pi/2$, f0 dither is loaded. 2f0 information may be detected from the output noise energy. At this time, it means that the phase shift controller accurately controls the phase at $\pi/2$.

Accordingly, Step 1502 may include: filtering the output signal of the optical modulator to obtain first frequency energy information, second frequency energy information or other multiple frequency energy information of the dithering frequency in the noise of the output signal.

In Step 1503, the relation information between the output signal and the noise signal is analyzed to obtain control information of a phase-shift bias voltage.

By analyzing the relation information between the signal and the noise in the output signal (for example, a signal-to-noise ratio), it can be known whether the phase shift of the signal is accurately controlled at $\pi/2$ or not. If the phase shift is accurately controlled at $\pi/2$, the signal energy reaches a maximum and the noise energy reaches a minimum, such that the signal-to-noise ratio reaches a maximum. As the phase shift of the signal is controlled by the bias voltage thereof, the control information of the phase-shift bias voltage can be obtained once the signal-to-noise ratio is known, based on the above principle.

If the relation information between the signal and the noise includes dither information, the control information of the phase-shift bias voltage can be obtained according to the noise energy information, the first frequency energy information, the second frequency energy information or other multiple frequency energy information of the phase shift signal.

The specific principle is illustrated with reference to FIG 12. At the beginning, a series of phase-shift DC voltages are generated by voltage scanning. The phase-shift DC voltages are loaded onto the $\pi/2$ phase shifter together with the dither signal, so that a series of phase shift signals containing the dither signal (that is, the output signals of the optical modulator) can be obtained. By analyzing the noise energy of the phase shift signals (or, and dithering frequency information), a phase-shift bias voltage can be obtained when the signal energy of the signal reaches a maximum and the noise energy reaches a minimum (or when dither information is loaded, the signal contains second dithering frequency or other multiple frequency information, or the second dithering frequency energy or other multiple frequency energy is greater than the first dithering frequency energy). The voltage is the desired phase-shift bias voltage, according to which the control information of the phase-shift bias voltage can generated.

In Step 1504, a current phase-shift bias voltage is obtained according to the control information, and then loaded onto the optical modulator. Specifically, the current phase-shift bias voltage may be loaded onto the $\pi/2$ phase shift unit in the optical modulator.

If the relation information between the signal and the noise includes the dither information, the dither information needs to be loaded in the bias voltage. At this time, this step further includes: obtaining a DC bias voltage according to the control signal; and adding the dither signal and the DC bias voltage to obtain a phase-shift bias voltage.

Otherwise, if the control information does not include the dither information, a suitable DC bias voltage may be directly obtained to serve as the phase-shift bias voltage.

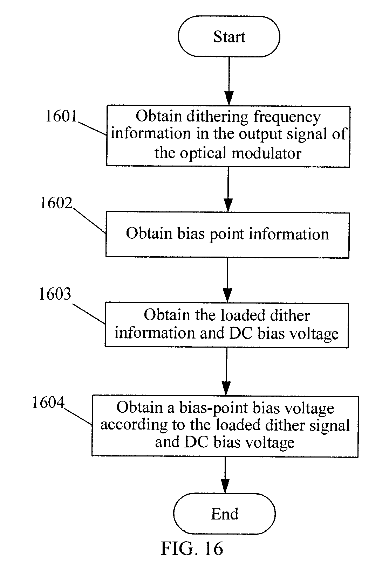

Meanwhile, the method for obtaining a bias voltage in the embodiment of the present invention may further include a method for obtaining a bias-point bias voltage. As shown in FIG 16, the method for obtaining a bias-point bias voltage includes the following steps.

In Step 1601, dithering frequency information of the output signal of the optical modulator is obtained. First frequency energy information, and second frequency energy information or other multiple frequency energy information of the dithering frequency can be obtained by filtering the output signal of the optical modulator.

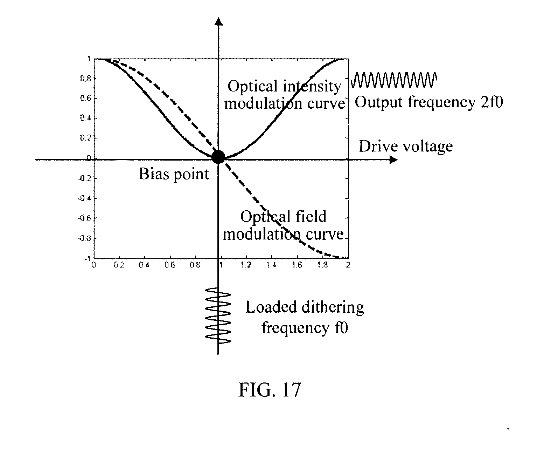

When a bias point of an MZM is at the lowest point and a dither voltage is loaded onto a bias point voltage, a change in the output optical power is caused. As shown in FIG 17, when the MZM is biased at the lowest point, the optical output dithering frequency is twice as much as the loaded frequency. That is, when the output dithering frequency is twice as much as the loaded dithering frequency, it indicates that the MZM is biased at the lowest point. Thus, in order to automatically obtain a bias voltage of the MZM, a batch of dither information may be loaded into the bias voltage, such that the bias point can be judged according to the dither signal in subsequent processes.

Thus, in an embodiment of the present invention, the first step for obtaining the bias voltage of the MZM is to obtain information about the dither signal from the output signal of the optical modulator.

In Step 1602, the output signal of the optical modulator and the obtained dithering frequency information are analyzed to obtain information about a bias point. That is, the bias point information is obtained by analyzing the output signal of the optical modulator and the obtained dithering frequency information according to a bias point judgment standard, based on the above principle.

The bias point judgment standard includes the following situations.

When the second frequency energy or other multiple frequency energy is the highest, the first frequency energy is the lowest, and the output signal of the optical modulator changes from large to small, the bias point locates at a lowest point.

When the second frequency energy or other multiple frequency energy is the highest, the first frequency energy is the lowest, and the output signal of the optical modulator changes from small to large, the bias point locates at a highest point.

When the first frequency energy is the highest, and the second frequency energy or other multiple frequency energy is the lowest, the bias point locates at an integration point.

Here, the lowest point, the highest point and the integration point refer to a lowest point, a highest point and an integration point of the optical intensity modulation curve of the MZM as shown in FIG 2, and the integration point refers to a center point between the highest point and the lowest point in the optical intensity curve.

In Step 1603, a DC bias voltage is obtained according to the bias point information. This step further includes: obtaining the DC bias voltage according to the bias point information and a bias point regulation strategy.

The bias point regulation strategy is illustrated in combination with the bias point judgment standard.

At the beginning, a series of DC voltages are generated by voltage scanning. The DC voltages are load onto the optical modulator together with the dither signal, so that a series of phase-modulated signals containing the dither signal can be obtained. By analyzing the output signal of the optical modulator and the obtained dithering frequency information, a DC voltage can be obtained when the second frequency energy or other multiple frequency energy is the highest, the first frequency energy is the lowest, and the output signal of the optical modulator (that is, the signal that is phase-modulated but not filtered) changes from large to small. At this time, the DC voltage is a bias voltage when the bias point is at the lowest point. Thus, the desired DC bias voltage can be obtained.

In Step 1604, a bias-point bias voltage loaded on the optical modulator is obtained according to the loaded dither signal and DC bias voltage. Specifically, the DC bias voltage may be modulated according to the loaded dither signal to obtain a dither-modulated bias-point bias voltage.

As can be seen from the above description, in the embodiments of the present invention, the method for controlling a bias voltage of an optical modulator has an automatic feedback regulation function, can feedback-control a phase-shift bias voltage of the π/2 phase shift unit in the optical modulator, and also provides a method for obtaining a bias-point bias voltage. Thus, the sensitivity of the π/2 phase shift control is increased, and the stability and accuracy of the phase-modulated signal are increased as a whole.

The above device embodiments are merely exemplary. Units described as separate components may be or may not be physically separated, that is, may be located at one place or distributed to a plurality of network units. Some or all of the modules may be selected and adapted to achieve the objective of the solution of the embodiment according to actual demands. Those of ordinary skill in the art may understand and implement the present invention without carrying out creative activities.

Through the above description of the embodiments, it is apparent to those skilled in the art that the embodiments may be accomplished by software on a necessary universal hardware platform, and definitely may also be accomplished by hardware. Therefore, the above technical solution or the part that makes contributions to the prior art can be substantially embodied in the form of a software product. The computer software product may be stored in a computer readable storage media such as a ROM/RAM, a magnetic disk, or an optical disk, and contain several instructions to instruct a computer equipment (for example, a personal computer, a server, or a network equipment) to perform the method as described in the embodiments of the present invention or in some parts of the embodiments.

The above embodiments are not intended to limit the scope of the technical solution. Any modification, equivalent replacement, and improvement made without departing from the scope and principle of the above embodiments fall within the scope of the technical solution.

**Claims**

1. A method for controlling a bias voltage of an optical modulator, comprising:

    obtaining an output signal of an optical modulator;
    obtaining relation information between the output signal of the optical modulator and a noise signal contained in the output signal;
    analyzing the relation information between the output signal and the noise signal to obtain control information of a phase-shift bias voltage; and
    obtaining a current phase-shift bias voltage according to the control information, and loading the current phase-shift bias voltage on the optical modulator.

2. The method according to claim 1, wherein the step of obtaining the relation information between the output signal of the optical modulator and the noise signal contained in the output signal comprises:

> filtering the output signal, and obtaining a signal-to-noise ratio of the output signal according to a filtering result; and
> wherein the step of filtering the output signal, and obtaining the signal-to-noise ratio of the output signal according to the filtering result comprises:

>> filtering the output signal; and
>> performing an envelope detection on the filtered signal, and obtaining the signal-to-noise ratio of the output signal according to a result of the envelope detection.

3. The method according to claim 1 or 2, wherein the output signal contains a dither signal, and the step of obtaining the relation information between the output signal of the optical modulator and the noise signal contained in the output signal comprises:

> filtering the output signal to obtain first frequency energy information, second frequency energy information or other multiple frequency energy information of a dithering frequency in a noise of the output signal; and
> wherein the step of analyzing the relation information between the output signal and the noise signal to obtain the control information of the phase-shift bias voltage comprises:

>> obtaining the control information of the phase-shift bias voltage according to noise energy information, the first frequency energy information, the second frequency energy information or the other multiple frequency energy information of the output signal; and
>> wherein the step of obtaining the current phase-shift bias voltage according to the control information comprises:

>>> obtaining a direct current (DC) bias voltage according to the control information; and
>>> adding the dither signal and the DC bias voltage to obtain the current phase-shift bias voltage.

4. The method according to any one of claims 1-3, further comprising:

> obtaining dithering frequency information in the output signal of the optical modulator;
> analyzing the output signal of the optical modulator and the obtained dithering frequency information to obtain bias point information;
obtaining a DC bias voltage according to the bias point information; and
obtaining a bias-point bias voltage loaded on the optical modulator according to the loaded dither signal and the DC bias voltage.

5. The method according to claim 4, wherein the step of obtaining the dithering frequency information in the output signal of the optical modulator comprises:

> filtering the output signal of the optical modulator to obtain the first frequency energy information of the dithering frequency and obtain the second frequency energy information or other multiple frequency energy information of the dithering frequency; and
> wherein the step of analyzing the output signal of the optical modulator and the obtained dithering frequency information to obtain the bias point information comprises:

>> analyzing the output signal of the optical modulator and the obtained dithering frequency information according to a bias point judgment standard to obtain the bias point information; and
>> the bias point judgment standard comprises:

>>> when the second frequency energy or other multiple frequency energy is the highest, the first frequency energy is the lowest and the output signal of the optical modulator changes from large to small, the bias point locates at a lowest point;
>>> when the second frequency energy or other multiple frequency energy is the highest, the first frequency energy is the lowest and the output signal of the optical modulator changes from small to large, the bias point locates at a highest point; and
>>> when the first frequency energy is the highest and the second frequency energy or other multiple frequency energy is the lowest, the bias point locates at an integration point.

6. The method according to claim 5, wherein the step of obtaining the loaded dither signal and DC bias voltage according to the bias point information comprises:

> obtaining the DC bias voltage according to the bias point information and a bias point regulation strategy.

**7.** A device for controlling a bias voltage of an optical modulator, comprising: a phase-shift bias voltage acquisition unit adapted to obtain a phase-shift bias voltage when performing a π/2 phase shift, wherein the phase-shift bias voltage acquisition unit comprises:

a phase shift signal acquisition module, adapted to obtain an output signal of an optical modulator;

a signal-to-noise information acquisition module, adapted to obtain relation information between the output signal of the optical modulator and a noise signal contained in the output signal;

a phase shift logic analysis module, adapted to analyze the relation information between the output signal and the noise signal to obtain control information of a phase-shift bias voltage; and

a phase-shift bias voltage acquisition module, adapted to obtain a current phase-shift bias voltage according to the control information, and load the current phase-shift bias voltage on the optical modulator.

**8.** The device according to claim 7, wherein the signal-to-noise information acquisition module comprises:

a signal-to-noise ratio acquisition sub-module, adapted to filter the output signal of the optical modulator, and obtain a signal-to-noise ratio of the output signal of the optical modulator according to a filtering result.

**9.** The device according to claim 7 or 8, wherein the signal-to-noise information acquisition module comprises:

a filtering sub-module, adapted to filter the output signal of the optical modulator;

a detection sub-module, adapted to perform an envelope detection on the filtered signal and obtain a result of the envelope detection; and

a signal signal-to-noise ratio acquisition sub-module, adapted to obtain a signal-to-noise ratio of the output signal of the optical modulator according to the result of the envelope detection.

**10.** The device according to one of the claims 7 to 9, wherein the signal-to-noise information acquisition module comprises:

a multiplied frequency information acquisition sub-module, adapted to filter the output signal of the optical modulator to obtain first frequency energy information, second frequency energy information or other multiple frequency energy information of a dithering frequency in a noise of the signal; and

wherein the phase shift logic analysis module comprises:

a control information acquisition sub-module, adapted to obtain the control information of the phase-shift bias voltage according to noise energy information, the first frequency energy information, the second frequency energy information or the other multiple frequency energy information of the output signal of the optical modulator.

**11.** The device according to any one of claims 7-10, further comprising a bias-point bias voltage acquisition unit, wherein the bias voltage acquisition unit comprises:

a dither information acquisition module, adapted to obtain dithering frequency information in the output signal of the optical modulator;

a logic analysis module, adapted to analyze the output signal of the optical modulator and the obtained dithering frequency information to obtain bias point information;

a signal generation module, adapted to obtain a direct current (DC) bias voltage according to the bias point information; and

a signal synthesis module, adapted to obtain a bias-point bias voltage loaded on the optical modulator according to a loaded dither signal and the DC bias voltage.

**12.** The device according to claim 11, wherein the dither information acquisition module comprises:

a first filtering sub-module, adapted to filter the output signal of the optical modulator to obtain the first frequency energy information of the dithering frequency; and

a second filtering sub-module, adapted to filter the output signal of the optical modulator to obtain the second frequency energy information or other multiple frequency energy information.

**13.** The device according to claim 12, wherein the logic analysis module comprises:

an analysis sub-module, adapted to analyze the output signal of the optical modulator and the obtained dithering frequency information according to a bias point judgment standard stored in a storage sub-module to obtain the bias point information;

the storage sub-module adapted to store the bias point judgment standard, and the bias point judgment standard comprises:

when the second frequency energy or other multiple frequency energy is the highest, the first frequency energy is the lowest and the output signal of the optical modulator changes from large to small, the bias point locates at a lowest point;

when the second frequency energy or other multiple frequency energy is the highest, the first frequency energy is the lowest and the output signal of the optical modulator changes from small to large, the bias point locates at a highest point; and

when the first frequency energy is the highest and the second frequency energy or other multiple frequency energy is the lowest, the bias point locates at an integration point.

**14.** The device according to claim 13, wherein the signal generation module comprises:

a dither generation sub-module, adapted to generate the loaded dither signal;

a DC voltage generation sub-module, adapted to obtain the DC bias voltage according to the bias point information and a bias point regulation strategy; and

wherein the bias voltage acquisition unit further comprises:

a time division switching module, adapted to perform time division switching on the loaded dither signal generated by the dither generation sub-module to obtain at least two loaded dither signals.

**15.** An optical emitter, comprising:

a laser, adapted to generate continuous light;

a driving module, adapted to input an electrical signal of data to be modulated;

an optical modulator, adapted to modulate the electrical signal of the data to be modulated onto the continuous light according to a certain bias voltage to form an optical signal carrying the data; and

the device for controlling a bias voltage of an optical modulator according to claim 7.

**Amended claims in accordance with Rule 137(2) EPC.**

**1.** A method for controlling an optical modulator, **characterized by** comprising:

obtaining an output signal of an optical modulator (1501);

obtaining relation information between the output signal of the optical modulator and a noise signal contained in the output signal (1502);

analyzing the relation information between the output signal and the noise signal to obtain control information of a phase-shift bias voltage (1503); and

obtaining a current phase-shift bias voltage according to the control information, and loading the current phase-shift bias voltage on the optical modulator (1504).

**2.** The method according to claim 1, wherein the step of obtaining the relation information between the output signal of the optical modulator and the noise signal contained in the output signal comprises:

filtering the output signal, and obtaining a signal-to-noise ratio of the output signal according to a filtering result; and

wherein the step of filtering the output signal, and obtaining the signal-to-noise ratio of the output signal according to the filtering result comprises:

filtering the output signal; and performing an envelope detection on the filtered signal, and obtaining the signal-to-noise ratio of the output signal according to a result of the envelope detection.

**3.** The method according to claim 1, wherein the output signal contains a first dither signal, and the step of obtaining the relation information between the output signal of the optical modulator and the noise signal contained in the output signal comprises:

filtering the output signal to obtain single harmonic power information, second harmonic power information or other multiple harmonic power information of a dithering frequency information in a noise of the output signal; and

wherein the step of analyzing the relation information between the output signal and the noise signal to obtain the control information of the phase-shift bias voltage comprises:

obtaining the control information of the phase-shift bias voltage according to noise energy information, the single harmonic power information, the second harmonic power information or the other multiple harmonic power information of the output signal; and

wherein the step of obtaining the current phase-shift bias voltage according to the control information comprises:

obtaining a first direct current (DC) bias voltage according to the control information; and adding the first dither signal and the first DC bias voltage to obtain the current phase-shift bias voltage.

**4.** The method according to any one of claims 1-3, further comprising:

obtaining second dithering frequency information in the output signal of the optical modulator; analyzing the output signal of the optical modulator and the obtained dithering frequency information to obtain bias point information; obtaining a second DC bias voltage according to the bias point information; and obtaining a bias-point bias voltage loaded on the optical modulator according to the second dither signal and the second DC bias voltage.

**5.** The method according to claim 4, wherein the step of obtaining the dithering frequency information in the output signal of the optical modulator comprises:

filtering the output signal of the optical modulator to obtain the single harmonic power information of the dithering frequency and obtain the second harmonic power information or other multiple harmonic power information of the dithering frequency information; and

wherein the step of analyzing the output signal of the optical modulator and the obtained dithering frequency information to obtain the bias point information comprises:

analyzing the output signal of the optical modulator and the obtained dithering frequency information according to a bias point judgment standard to obtain the bias point information; and the bias point judgment standard comprises:

when the second harmonic power or other multiple harmonic power is the highest, the single harmonic power is the lowest and the output signal of the optical modulator changes from large to small, the bias point locates at a lowest point; when the second harmonic power or other multiple harmonic power is the highest, the single harmonic power is the lowest and the output signal of the optical modulator changes from small to large, the bias point locates at a highest point; and when the single harmonic power is the highest and the second harmonic power or other multiple harmonic power is the lowest, the bias point locates at an quadrature point.

**6.** The method according to claim 5, wherein the step of obtaining the loaded dither signal and DC bias voltage according to the bias point information comprises:

obtaining the DC bias voltage according to the bias point information and a bias point regulation strategy; and

wherein the bias point regulation strategy comprises:

generating at the beginning a series of DC voltages by voltage scanning; loading the DC voltages onto the optical modulator together with the dither signal, so that a series of phase-modulated signals containing the dither signal can be obtained; obtaining a DC voltage when the second harmonic power or other multiple harmonic power is the highest, the single harmonic power is the lowest, and the output signal of the optical modulator changes from large to small by analyzing the phase-modulated signals and the obtained dithering frequency information;

wherein at this time, the DC voltage is a bias voltage when the bias point locates at the lowest point.

**7.** A device for controlling an optical modulator, **characterized by** comprising:

a phase-shift bias voltage acquisition unit adapted to obtain a phase-shift bias voltage to perform a π/2 phase shift, wherein the phase-shift bias voltage acquisition unit comprises:

a phase shift signal acquisition module (20), adapted to obtain an output signal of an optical modulator; a signal-to-noise information acquisition module (22), adapted to obtain relation information between the output signal of the optical modulator and a noise signal contained in the output signal; a phase shift logic analysis module (24), adapted to analyze the relation information between the output signal and the noise signal to obtain control information of a phase-shift bias voltage; and a phase-shift bias voltage acquisition module (26), adapted to obtain a current phase-shift bias voltage according to the control information, and load the current phase-shift bias voltage on the optical modulator.

**8.** The device according to claim 7, wherein the signal-to-noise information acquisition module comprises:

a signal-to-noise ratio acquisition sub-module, adapted to filter the output signal of the optical modulator, and obtain a signal-to-noise ratio of the output signal of the optical modulator according to a filtering result.

**9.** The device according to claim 7, wherein the signal-to-noise information acquisition module comprises:

a filtering sub-module, adapted to filter the output signal of the optical modulator;
a detection sub-module, adapted to perform an envelope detection on the filtered signal and obtain a result of the envelope detection; and
a signal signal-to-noise ratio acquisition sub-module, adapted to obtain a signal-to-noise ratio of the output signal of the optical modulator according to the result of the envelope detection.

**10.** The device according to claim 7, wherein the signal-to-noise information acquisition module comprises:

a multiplied frequency information acquisition sub-module, adapted to filter the output signal of the optical modulator to obtain single harmonic power information, second harmonic power information or other multiple harmonic power information of a dithering frequency in a noise of the signal; and

wherein the phase shift logic analysis module comprises:

a control information acquisition sub-module, adapted to obtain the control information of the phase-shift bias voltage according to noise energy information, the single harmonic power information, the second harmonic power information or the other multiple harmonic power information of the output signal of the optical modulator.

**11.** The device according to any one of claims 7-10, further comprising a bias-point bias voltage acquisition unit, wherein the bias voltage acquisition unit comprises:

a dither information acquisition module, adapted to obtain dithering frequency information in the output signal of the optical modulator;
a logic analysis module, adapted to analyze the output signal of the optical modulator and the obtained dithering frequency information to obtain bias point information;
a signal generation module, adapted to obtain a direct current (DC) bias voltage according to the bias point information; and
a signal synthesis module, adapted to obtain a bias-point bias voltage loaded on the optical modulator according to a dither signal and the DC bias voltage.

**12.** The device according to claim 11, wherein the dither information acquisition module comprises:

a first filtering sub-module, adapted to filter the output signal of the optical modulator to obtain the single harmonic power information of the dithering frequency information; and
a second filtering sub-module, adapted to filter the output signal of the optical modulator to obtain the second harmonic power information or other multiple harmonic power information.

**13.** The device according to claim 12, wherein the logic analysis module comprises:

an analysis sub-module, adapted to analyze the output signal of the optical modulator and the obtained dithering frequency information according to a bias point judgment standard stored in a storage sub-module to obtain the bias point information;
the storage sub-module adapted to store the bias point judgment standard, and the bias point judgment standard comprises:

when the second harmonic power or other multiple harmonic power is the highest, the single harmonic power is the lowest and the output signal of the optical modulator changes from large to small, the bias point locates at a lowest point;
when the second harmonic power or other multiple harmonic power is the highest, the single harmonic power is the lowest and the output signal of the optical modulator changes from small to large, the bias point locates at a highest point; and
when the single harmonic power is the highest and the second harmonic power or other multiple harmonic power is the lowest, the bias point locates at an quadrature point.

**14.** The device according to claim 13, wherein the signal generation module comprises:

a dither generation sub-module, adapted to generate the loaded dither signal;
a DC voltage generation sub-module, adapted to obtain the DC bias voltage according to the bias point information and a bias point regulation strategy; and

wherein the bias voltage acquisition unit further comprises:

a time division switching module, adapted to perform time division switching on the loaded dither signal generated by the dither generation submodule to obtain at least two loaded dither signals; and

wherein the bias point regulation strategy comprises:

generating at the beginning a series of DC voltages by voltage scanning;
loading the DC voltages onto the optical modulator together with the dither signal, so that a series of phase-modulated signals containing the dither signal can be obtained;
obtaining a DC voltage when the second harmonic power or other multiple harmonic power is the highest, the single harmonic power is the lowest, and the output signal of the optical modulator changes from large to small by analyzing the phase-modulated signals and the obtained dithering frequency information;

wherein at this time, the DC voltage is a bias voltage when the bias point locates at the lowest point.

**15.** An optical emitter, comprising:

a laser, adapted to generate continuous light;
a driving module, adapted to input an electrical signal of data to be modulated;
an optical modulator, adapted to modulate the electrical signal of the data to be modulated onto the continuous light according to a certain bias voltage to form an optical signal carrying the data; and
the device for controlling a bias voltage of an optical modulator according to claim 7.

**DPSK**

Optical intensity

Waveform

1    1    0    1

**DQPSK**

Optical intensity

Waveform

00    01   01    10    10    11

FIG. 1

Output optical
intensity

Optical intensity
modulation
curve

Drive voltage

Bias point

Optical field
modulation
curve

Data to be transmitted

1   0   1   1   0

FIG. 2

$$v_1(t)$$

$E_{in}$

$E_{out}$

**FIG. 3**

Modulator 1

Phase-shift bias voltage acquisition unit

PD2

Driver 1

I-channel data

V3

Data to be transmitted

Pre-code

DFB

MZM1

π/2

π/2 phase shift unit

Optical splitter module

To an optical fiber line

MZM2

Optical modulator

Q-channel data

V1

V2

Driver 2

Modulator 2

Bias-point bias voltage acquisition unit

PD1

Bias-point bias voltage acquisition unit

**FIG. 4**

FIG. 5

FIG. 6

FIG. 7

14

Signal generation module

140

dither generation sub-module

142

DC voltage generation sub-module

FIG. 8

1

Bias voltage acquisition unit

Output signal of an optical modulator

10

dither information acquisition module

12

Logic analysis module

14

Signal generation module

140

dither generation sub-module

142

DC voltage generation sub-module

DC voltage generation sub-module

Time division switching module

16

Signal synthesis module

To modulator 1

To modulator 2

FIG. 9

FIG. 9a

FIG. 10

FIG. 11

Noise energy

Output frequency 2f0

Voltage value

π/2

Loaded dithering
frequency f0

FIG. 12

26

Phase-shift bias voltage
acquisition module

260

Generation sub-module

262

Synthesis sub-module

FIG. 13

FIG. 14

1501 — Obtain an output signal of an optical modulator

1502 — Obtain a relation information between the output signal and a noise thereof

1503 — Obtain control information of a phase-shift bias voltage

1504 — Obtain a phase-shift bias voltage according to the control information

FIG. 15

FIG. 16

FIG. 17

Europäisches
Patentamt
European
Patent Office
Office européen
des brevets

# EUROPEAN SEARCH REPORT

Application Number

EP 09 15 8432

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 1 727 303 A (FUJITSU LTD [JP]) 29 November 2006 (2006-11-29) * paragraphs [0023] - [0034]; figures 5,6 * * paragraphs [0040] - [0058]; figures 10-12 * * paragraphs [0091] - [0094]; figure 20 * * paragraphs [0127] - [0131]; figure 28 * * paragraph [0179]; figure 44 * * paragraphs [0180] - [0182]; figures 45,46 * * paragraphs [0197] - [0206]; figure 51B * ----- | 1-15 | INV. G02F1/01 H04B10/155 H04L27/36 |
| A | EP 1 764 935 A (FUJITSU LTD [JP]) 21 March 2007 (2007-03-21) * paragraphs [0019] - [0035]; figure 5 * * paragraphs [0037] - [0039]; figure 11 * * paragraphs [0040] - [0044]; figures 12A-12C * * paragraph [0045]; figures 13,14 * * paragraphs [0048], [0049]; figure 16 * * paragraphs [0053] - [0058]; figures 18,19 * * paragraph [0059]; figure 20 * ----- | 1-15 | |
| A | EP 1 791 274 A (ALCATEL LUCENT [FR]) 30 May 2007 (2007-05-30) * paragraph [0045]; figure 3b * * paragraph [0046]; figure 6 * * paragraph [0047]; figure 7 * * paragraphs [0050] - [0052]; figures 8,9 * ----- | 1-15 | TECHNICAL FIELDS SEARCHED (IPC) G02F H04B H04L |
| A | EP 1 004 920 A (FUJITSU LTD [JP]) 31 May 2000 (2000-05-31) * paragraphs [0044], [0045]; figure 1 * * paragraphs [0046] - [0052]; figures 2-6 * * paragraphs [0055] - [0065]; figure 7 * ----- | 4-6, 11-14 | |

The present search report has been drawn up for all claims

| Place of search | Date of completion of the search | Examiner |
|---|---|---|
| Munich | 26 May 2009 | Cossu, Alessandro |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 09 15 8432

This annex lists the patent family members relating to the patent documents cited in the above-mentioned European search report.
The members are as contained in the European Patent Office EDP file on
The European Patent Office is in no way liable for these particulars which are merely given for the purpose of information.

26-05-2009

| Patent document cited in search report | | Publication date | Patent family member(s) | | Publication date |
|---|---|---|---|---|---|
| EP 1727303 | A | 29-11-2006 | EP | 2003797 A1 | 17-12-2008 |
| | | | EP | 2001148 A1 | 10-12-2008 |
| | | | JP | 2007043638 A | 15-02-2007 |
| | | | US | 2006263098 A1 | 23-11-2006 |
| EP 1764935 | A | 21-03-2007 | JP | 2007082094 A | 29-03-2007 |
| | | | US | 2007065161 A1 | 22-03-2007 |
| EP 1791274 | A | 30-05-2007 | AT | 390768 T | 15-04-2008 |
| | | | CN | 1972161 A | 30-05-2007 |
| | | | DE | 602005005697 T2 | 30-04-2009 |
| | | | US | 2007122161 A1 | 31-05-2007 |
| EP 1004920 | A | 31-05-2000 | CN | 1254851 A | 31-05-2000 |
| | | | DE | 69935649 T2 | 06-12-2007 |
| | | | JP | 3723358 B2 | 07-12-2005 |
| | | | JP | 2000162563 A | 16-06-2000 |
| | | | US | 6278539 B1 | 21-08-2001 |

EPO FORM P0459

For more details about this annex : see Official Journal of the European Patent Office, No. 12/82